# EUROPÄISCHE PATENTANMELDUNG

(11) **EP 2 708 759 A2**
(43) Veröffentlichungstag der Anmeldung: **19.03.2014**
(21) Anmeldenummer: 13183465.7
(22) Anmeldetag: 09.09.2013
(51) Int. Cl.: F15B 21/04, B01D 53/26

(54) **Kompakte Lufttrocknungsanlage mit modularem Aufbau**

(30) Priorität: 13.09.2012 DE 102012108581
(71) Anmelder: KNORR-BREMSE Systeme für Schienenfahrzeuge GmbH, 80809 München (DE)
(72) Erfinder: Hartl, Michael, 82008 Unterhaching (DE); Urra, Christian, 80807 München (DE); Popescu, Corneliu, 80809 München (DE); Lund, Manuel, 82418 Murnau (DE)

(57) **Zusammenfassung**

Die Erfindung betrifft eine Lufttrocknungsanlage (1) eines Druckluftversorgungssystems umfassend mindestens zwei auf einer Trägerplatte (2) lösbar angeordnete Lufttrocknerpatronen (3a, 3b), die nach dem Adsorptionstrocknungsprinzip Druckluft entfeuchten, wobei die Trägerplatte (2) symmetrisch aufgebaut ist und Komponenten der Ventiltechnik (4) sowie Komponenten der Steuerung (5), Komponenten der Vorabscheidung (6) und Komponenten der Entwässerung (7) parallel in einer Ebene in der Trägerplatte (2) integriert sind.

## Beschreibung

### GEBIET DER ERFINDUNG

Die vorliegende Erfindung betrifft eine Lufttrocknungsanlage eines Druckluftversorgungssystems umfassend mindestens zwei auf einer Trägerplatte lösbar angeordnete Lufttrocknerpatronen, die nach dem Adsorptionstrocknungs-prinzip Druckluft entfeuchten.

Das Einsatzgebiet der Erfindung erstreckt sich vornehmlich auf Schienenfahrzeuge, deren Druckluftversorgungssystem in erster Linie für die Bereitstellung eines Bremsdrucks für die Fahrzeugbremsen dient. Um eine möglichst trockene Bremsluft zu erzeugen umfasst das kompressorbetriebene Druckluftversorgungssystem zur Luftaufbereitung eine Lufttrocknungsanlage, welche der von außen angesaugten und verdichteten Druckluft die hierin enthaltene Feuchtigkeit entzieht. Hierfür werden im Schienenfahrzeugbau vornehmlich Ein- und Zweikammerlufttrockner eingesetzt, welche der Druckluft die Feuchtigkeit entziehen und diese in Form von kondensathaltiger Druckluft nach außen hin abführen.

### HINTERGRUND DER ERFINDUNG

Aus dem allgemein bekannten Stand der Technik geht hervor, dass insbesondere in Schienenfahrzeugen Ein- und Zweikammerlufttrockner zum Einsatz kommen, bei denen Lufttrocknerpatronen über eine Trägerplatte angebracht werden. Unterhalb der Trägerplatte werden Ventile die zum Steuern der Trocknungsfunktion und der Regenerierungsfunktion benötigt werden sowie etwaige Abscheider und Schalldämpfer angebracht. In der Regel wird das entstehende Kondensat in diesen Lufttrocknungsanlagen über ein Gefälle aufweisende Kanäle nach unten abgeführt.

Im Fahrzeugbau und insbesondere bei Schienenfahrzeugen, kommen zunehmend sogenannte Niederflurfahrzeugen zum Einsatz. Eine Besonderheit dieser Niederflurfahrzeuge ist der niedrige für Hilfsaggregate zur Verfügung stehende Einbauraum. Lufttrocknerpatronen werden unter Inkaufnahme drastischer Leistungsreduzierungen häufig horizontal ausgerichtet, um den Anforderungen an niedrigen Einbauräumen von ca. 390mm zu genügen.

Durch das Komprimieren der Umgebungsluft kann ein Teil des darin enthaltenen Wasserdampfes kondensieren, die relative Luftfeuchtigkeit erhöht sich. Mit Hilfe der Lufttrocknungsanlage wird der Feuchtigkeitsgehalt der Druckluft auf den angestrebten Wert reduziert. Die Druckluft strömt dabei durch ein Trockenmittel, das ihr Feuchtigkeit entzieht. Von besonderer Bedeutung ist die Adsorptionstrocknung, bei der der Luft auf physikalischem Weg Feuchtigkeit entzogen wird. Diese wird insbesondere bei Einkammerlufttrocknungsanlagen und Zweikammerlufttrocknungsanlagen von Schienenfahrzeugen eingesetzt.

Bei Einkammerlufttrockungsanlagen wird die erzeugte Druckluft über Trockenbehälter mit einem Trockenmittel geleitet. Ein Teil der getrockneten Luft wird in einem separaten Luftbehälter gespeichert. Da die Speicherwirkung des Trockenmittels begrenzt ist, muss dieses nach einer gewissen Zeit regeneriert werden. Dazu wird bei ausgeschalteter Druckluftförderung die im separaten Luftbehälter gespeicherte Luft zum Regenerieren des Trockenmittels herangezogen. Das ausgeschiedene Kondensat wird in der Kondensatsammelanlage aufgefangen. Für eine einwandfreie kontinuierliche Lufttrocknung sind hinreichend lange Regenationsphasen erforderlich. Hierdurch bedingt ist der Einsatz von Einkammerlufttrocknungsanlagen in Schienenfahrzeugen mit stark schwankendem Luftbedarf nicht zweckmäßig.

Demgegenüber werden Zweikammerlufttrocknungsanlagen zur Sicherstellung der kontinuierlichen Lufttrocknung unabhängig vom Einschaltintervall des Kompressors verwendet. Das Wirkprinzip der Trocknung entspricht dem der Einkammerlufttrocknungsanlagen. Sie bestehen aus zwei gleichen Behältern. Während ein Behälter zur Lufttrocknung verwendet wird, erfolgt im anderen Behälter die Regenerierung des Trockenmittels. Dazu wird ein kleiner Teil der getrockneten Luft herangezogen. Die Umschaltung erfolgt automatisch in Abhängigkeit der Laufzeit des Kompressors nach einem festgelegten Zyklus.

Die Druckluftbeschaffung setzt sich im Wesentlichen aus der Drucklufterzeugung und der Luftaufbereitung zusammen wobei zur Drucklufterzeugung Kompressoren eingesetzt werden und zur Luftaufbereitung Lufttrocknungsanlagen und Ölfilter dienen. Nachdem die Druckluft aufbereitet wird, wird sie in den Hauptluftbehältern gespeichert, welche als Reservoir für die Bremsanlagen des Zuges sowie aller weiteren Nebenverbraucher und Zusatzeinrichtungen dienen.

Aus der DE 34 45 699 A1 geht ein Einkammerlufttrockner hervor, welcher für im Intervallbetrieb aufladbare Druckluftversorgungssysteme vorgesehen ist und eine einzige regenerierbare Trocknungspatrone und einen die herrschende Luftfeuchtigkeit im Luftvorratsvolumen messenden Feuchtigkeitssensor aufweist. Eine Auswerteelektronik veranlasst während der Leerlaufphase des Kompressors und einen definierten Schwellwert übersteigender Luftfeuchtigkeit im Luftvorratsbehälter ein Regenerieren der Trocknungspatrone. Während des Regenerierungsbetriebs wird die Druckluft derart rückwärts durch die Trocknungspatrone geleitet, dass die hieraus austretende kondensathaltige Druckluft an ein Ablassventil zur Abführung nach außen gelangt.

Aus DE 35 33 893 A1 geht ein Zweikammerlufttrockner eines Druckluftversorgungssystems für Schienenfahrzeuge hervor, welcher über zwei Trocknungsbehälter verfügt, die abwechselnd betreibbar sind, um eine kontinuierliche Druckluftversorgung zu gewährleisten. Während in dem einen Trocknungsbehälter der vom Kompressor erzeugte Druckluftstrom getrocknet wird, wird das Trockenmittel des anderen Trocknungsbehälters regeneriert. Durch ein an die beiden Trocknungsbehälter angeschlossenes Schaltventil wird in einer zeitlich vorbestimmbaren Wechselfolge zu trocknende Druckluft in einem der Trocknungsbehälter eingeleitet und jeweils bei der Regeneration im anderen Trocknungsbehälter verwendete Luft von diesem abgeleitet.

Ferner offenbart die AT 500 724 A1 eine Lufttrocknereinheit als Teil einer Druckluftversorgungseinrichtung in einem Nutzfahrzeug mit einem am Fahrgestellrahmen des Nutzfahrzeuges befestigten Lufttrockner, einem damit verbundenen Trockenluftbehälter und wenigstens einem Ventil mit mindestens einem elektrischpneumatischen Schalter und mindestens einem Druckbegrenzungsventil. Die Lufttrocknereinheit ist als vormontierter Gesamtmodul über mindestens ein tragendes Element am Fahrgestellrahmen befestigbar. Das tragende Element ist als einstückiges Winkelelement ausgebildet und weist eine im Wesentlichen vertikal und senkrecht zum Fahrgestellrahmen stehende ebene Grundplatte auf mit Befestigungsbereichen für den Lufttrockner, den Trockenluftbehälter, das Ventil und für den Anschluss am Fahrgestellrahmen.

### OFFENBARUNG DER ERFINDUNG

Es ist daher die Aufgabe der vorliegenden Erfindung eine kompakte und bauraumeinsparende Lufttrocknungsanlage zur Verfügung zu stellen, die eine gleichmäßiges Durchströmen der Lufttrocknungspatronen ermöglich und ein modulares Konzept aufweist, sodass die Trocknerleistung anpassbar ist. Ferner soll die Lufttrocknungsanlage über eine gute Zugänglichkeit sowie Reparatur- und Wartungsfreundlichkeit verfügen.

Die Aufgabe wird ausgehend von einer Lufttrocknungsanlage gemäß dem Oberbegriff von Anspruch 1 in Verbindung mit dessen kennzeichnenden Merkmalen gelöst. Vorteilhafte Weiterbildungen der Erfindung gehen aus den nachfolgenden abhängigen Ansprüchen hervor.

Erfindungsgemäß ist die Trägerplatte symmetrisch aufgebaut, wobei Komponenten der Ventiltechnik sowie Komponenten der Steuerung, Komponenten der Vorabscheidung und Komponenten der Entwässerung parallel in einer Ebene in der Trägerplatte integriert sind. Die Trägerplatte ist in der Weise symmetrisch aufgebaut, dass die einzelnen Lufttrocknerpatronen mit dem annähernd gleichen Volumenstrom an feuchter Luft beaufschlagt werden, wobei im Wesentlichen keine weiteren Drosseln und Regelungsmittel notwendig sind. Der symmetrische Aufbau bezieht sich insbesondere auf die Leitungsführung der Trägerplatte. Dadurch ist sichergestellt, dass alle Lufttrocknerpatronen in gleicher Weise an der Trocknungsleistung der Lufttrocknungsanlage teilhaben. Ferner sind alle Komponenten derart in der Trägerplatte angeordnet, dass die Schnittstellenverschraubungen aller Komponenten von außen zugänglich sind, sodass ein Wartung oder Reparatur aller Komponenten ohne einen Ausbau der Lufttrocknungsanlage erfolgen kann.

Die Erfindung schließt die technische Lehre ein, dass die mindestens zwei Lufttrocknerpatronen achsensymmetrisch zueinander angeordnet sind und um einen Winkel von 20° bis 60° zu einer vertikal verlaufenden Linie an der Trägerplatte befestigt sind. Die achsensymmetrische Anordnung der mindestens zwei Lufttrocknerpatronen ist mit dem symmetrischen Aufbau der Trägerplatte und der daraus resultierenden Vorteile verbunden. Ein Winkel kleiner als 20° ist mit einer zu geringen Neigung der mindestens zwei Lufttrocknerpatronen verbunden, sodass eine vorgegebene Höhe der Lufttrocknungsanlage von 390mm nicht erreichbar ist. Eine zu hohe Neigung von über 60° begünstigt eine schlechte Abführung von Wasser und beeinträchtigt so die Trocknerleistung der mindestens zwei Lufttrocknerpatronen.

Vorzugsweise beträgt eine Gesamthöhe der Lufttrocknungsanlage mindestens 250mm und höchstens 390mm. Die erfindungsgemäße notwendige niedrige Bauhöhe wird zum einen durch die Schwenkung der Lufttrocknerpatronen weg von der Horizontalen erreicht und zum Anderen, durch die Integration mehrerer Komponenten der Lufttrocknungsanlage parallel innerhalb derselben Trägerplatte beziehungsweise innerhalb einer Ebene der Trägerplatte.

Des Weiteren bevorzugt ist, dass mindestens ein Heizelement zur Beheizung der in der Trägerplatte integrierten Komponenten in der Trägerplatte integriert ist. Fehlende Gefällestrecken, welche dass Ableiten von Wasser begünstigen und die Gefahr des Einfrierens minimieren, werden durch eine Beheizung der Trägerplatte kompensiert, wobei ortsnah am Heizelement alle mit Feuchtigkeit beaufschlagten Komponenten angeordnet sind.

Gemäß einer die Erfindung weiter verbessernden Maßnahme wird vorgeschlagen, dass die mindestens zwei Lufttrocknerpatronen über ein Gewinde lösbar mit der Trägerplatte verbunden sind, wobei das Lösen der mindestens zwei Lufttrocknerpatronen von der Trägerplatte durch ein Ausschrauben der mindestens zwei Lufttrocknerpatronen um mindestens 30° und höchstens 90° erfolgt. Der durch das Gewinde realisierte Schraubverschluss der mindestens zwei Lufttrocknerpatronen ermöglicht eine hohe Wartungsfreundlichkeit. Die geringe zum Aufschrauben der mindestens zwei Lufttrocknerpatronen benötigte Drehung von einer zwölftel Umdrehung im Falle von 30°, und von einer viertel Umdrehung im Falle von 90° fördert bei Wartungsarbeiten ein schnelles öffnen der mindestens zwei Lufttrocknerpatronen und spart somit Arbeitszeit ein.

Es wird weiterhin vorgeschlagen, dass die mindestens zwei Lufttrocknerpatronen mittels eines Bajonettrings lösbar mit der Trägerplatte verbunden sind. Durch diese vorteilhafte Anordnung des Bajonettrings können die mindestens zwei Lufttrocknerpatronen schnell und ohne Werkzeug gewechselt werden. Dies spart Zeit ein und erleichtert zudem den Austausch der Lufttrocknerpatronen.

Vorzugsweise sind die mindestens zwei Lufttrocknerpatronen und der Bajonettring aus Stahlblech gefertigt. Besonders bevorzugt ist dabei die Fertigung durch Kaltumformung. Dies bietet eine schnelle und genaue Fertigungsmöglichkeit, die keiner Nachbearbeitung der Fertigungsteile bedarf. Ferner erhöht sich durch die Kaltumformung auch die Festigkeit der Fertigungsteile aufgrund des Anstiegs der Versetzungsdichte im Werkstoff.

Die Erfindung schließt die technische Lehre ein, dass zwischen der mindestens zwei Lufttrocknerpatronen und der Trägerplatte ein Adapter lösbar mit der Trägerplatte verbunden ist, um den Einbau verschiedener Lufttrocknerpatronen zu ermöglichen. Besonders vorteilhaft ist eine Schraubverbindung zwischen Adapter und Trägerplatte, wobei durch Lösen der Schrauben der Adapter entfernt werden kann. Des Weiteren ist es aber auch denkbar, den Adapter durch ein Gewinde an die Trägerplatte zu befestigen. Somit können aufgrund des Adapters verschiedene handelsübliche Arten von Lufttrocknerpatronen für die Lufttrocknungsanlage verwendet werden.

Des Weiteren bevorzugt ist, dass der Bajonettring mit einer Sicherheitsschraube gegen Verdrehung gesichert ist, wobei ein Ausschrauben der Sicherheitsschraube eine Entlüftung der Lufttrocknungsanlage bewirkt. Die Sicherheitsschraube ist, sofern die mindestens zwei Lufttrocknerpatronen über Adapter an die Trägerplatte angebracht sind, am Adapter angeordnet. Anderenfalls ist die Sicherheitsschraube direkt an der Lufttrocknerpatrone angeordnet.

Gemäß einem bevorzugten Ausführungsbeispiel sind weitere Lufttrocknerpatronen paarweise und achsensymmetrisch zueinander an die Trägerplatte angeordnet, um eine Trocknerleistung der Lufttrocknungsanlage zu erhöhen. Dadurch ergibt sich ein modularer Aufbau der Lufttrocknungsanlage, wobei unabhängig von der Anzahl der Lufttrocknerpatronen durch den symmetrischen Aufbau der Trägerplatte immer ein gleichmäßiges und identisches Durchströmen der Lufttrocknerpatronen mit der zu trocknenden Luft realisiert wird.

### KURZE BESCHREIBUNG DER ZEICHNUNGEN

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigen:
- Fig.1: eine perspektivische Darstellung von unten einer erfindungsgemäßen Lufttrocknungsanlage mit vier Lufttrocknerpatronen in einer V-Anordnung,
- Fig.2: eine perspektivische Darstellung von oben der erfindungsgemäßen Lufttrocknungsanlage aus Fig.1,
- Fig.3: eine perspektivische Darstellung einer erfindungsgemäßen Lufttrocknungsanlage mit vier in Reihe angeordneten Lufttrocknerpatronen,

### DETAILLIERTE BESCHREIBUNG EINER BEVORZUGTEN AUSFÜHRUNGSFORM

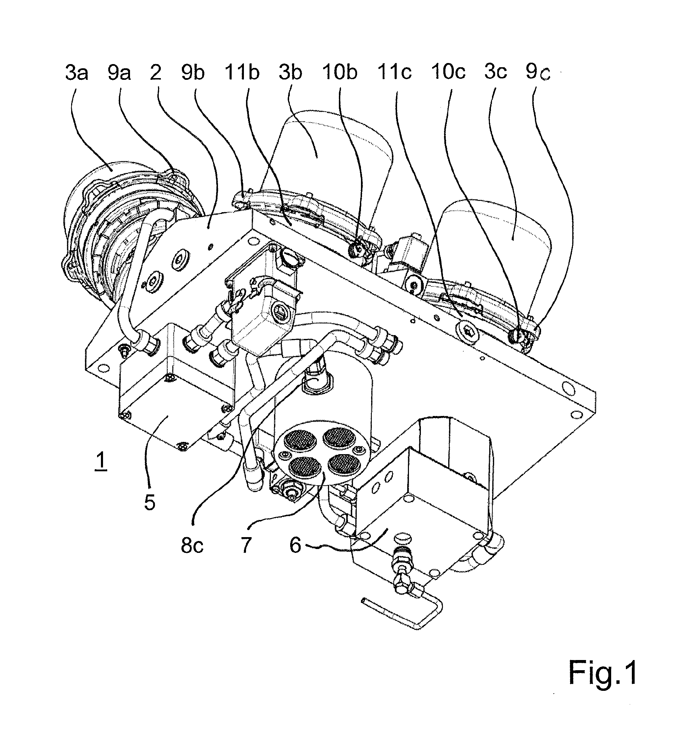

Gemäß Fig. 1 weist eine erfindungsgemäße Lufttrocknungsanlage 1 mit vier Lufttrocknerpatronen 3a, 3b, 3c, 3d (wobei 3d aus perspektivischen Gründen nicht dargestellt ist) in einer V-Anordnung eine symmetrisch aufgebaute Trägerplatte 2 auf. Die Lufttrocknerpatronen 3a, 3b, 3c, 3d sind über ein Gewinde lösbar mit der Trägerplatte 2 verschraubt und weisen darüber hinaus jeweils einen Bajonettring 9a, 9b, 9c, 9d auf, der sie zusätzlich sichert. Das Lösen der Lufttrocknerpatronen 3a, 3b, 3c, 3d von der Trägerplatte 2 erfolgt durch ein Ausschrauben der Lufttrocknerpatronen 3a, 3b, 3c, 3d um 20°. Sowohl die Bajonettringe 9a, 9b, 9c, 9d (wobei 9d aus perspektivischen Gründen nicht dargestellt ist)als auch die Lufttrocknerpatronen 3a, 3b, 3c, 3d sind aus einem Stahlblech gefertigt. Die Bajonettringe 9a, 9b, 9c, 9d sind mit jeweils einer Sicherheitsschraube 10a, 10b, 10c, 10d (wobei 10d aus perspektivischen Gründen nicht dargestellt ist) gegen Verdrehung gesichert, wobei ein Ausschrauben der Sicherheitsschraube 10a, 10b, 10c, 10d eine Entlüftung der Lufttrocknungsanlage 1 bewirkt. Ferner ist zwischen den Lufttrocknerpatronen 3a, 3b, 3c, 3d und der Trägerplatte 2 jeweils ein Adapter 11a, 11b, 11c, 11d (wobei 11a und 11d aus perspektivischen Gründen nicht dargestellt sind) lösbar mit der Trägerplatte 2 verbunden, um den Einbau verschiedener Lufttrocknerpatronen 3 zu ermöglichen.

Aus Fig. 1 geht hervor, dass auf einer Unterseite der Trägerplatte 2 Komponenten der Steuerung 5 in Form eines Klemmkastens 5, Komponenten der Vorabscheidung 6 in Form eines Abscheiders 6 und Komponenten der Entwässerung 7 in Form eines Schalldämpfers 7 angeordnet sind. Ferner sind unterschiedliche Leitungen sichtbar, die zwischen den jeweiligen Komponenten 5, 6, 7 angeordnet sind, um sie miteinander zu verbinden. Im Schalldämpfer 7 ist seitlich ein Heizelement 8 zur Beheizung angeordnet.

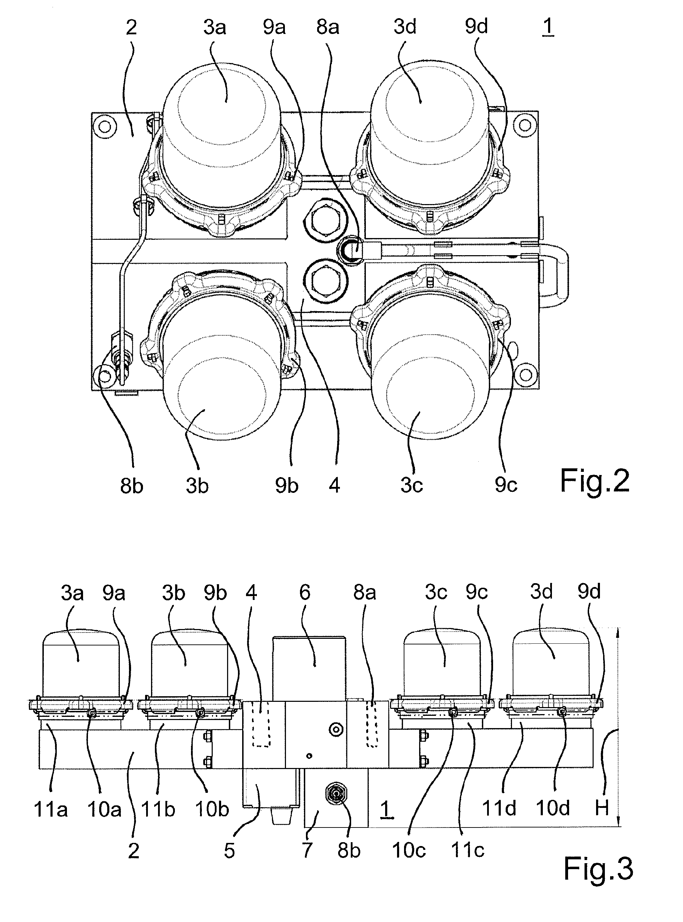

Fig.2 stellt die in Fig.1 gezeigte Lufttrocknungsanlage 1 von oben dar. Aus dieser Perspektive lassen sich alle vier Lufttrocknerpatronen 3a, 3b, 3c, 3d erkennen. Diese sind achsensymmetrisch zueinander angeordnet und um einen Winkel von 30°zu einer vertikal verlaufenden Ebene an der Trägerplatte 2 befestigt. Ferner sind zwischen den vier Lufttrocknerpatronen 3a, 3b, 3c, 3d Komponenten der Ventiltechnik 4 angeordnet. Darüber hinaus ist ein Heizelement 8a in den Komponenten der Ventiltechnik 4 und ein weiteres Heizelement 8b in der Trägerplatte 2 angeordnet, um diese zu beheizen. Diese kompakte Bauweise ist besonders vorteilhaft, da die Heizwirkung der Heizstäbe 8a, 8b, 8c sich aufgrund des geringen Bauraumes besonders gut entfaltet.

Nach Fig. 3 weist die erfindungsgemäße Lufttrocknungsanlage 1 vier in Reihe angeordnete Lufttrocknerpatronen 3a, 3b, 3c, 3d auf. Auf der Unterseite der Trägerplatte 2 sind Komponenten der Steuerung 5 in Form eines Klemmkastens 5, und Komponenten der Entwässerung 7 in Form eines Schalldämpfers 7 angeordnet. Im Schalldämpfer 7 ist das Heizelement 8b angeordnet. Ein weiteres Heizelement 8a ist in der Trägerplatte 2 angeordnet. Oberhalb der Trägerplatte 2 sind Komponenten der Vorabscheidung 6 in Form eines Abscheiders 6 angeordnet. Ferner sind in der Trägerplatte 2 Komponenten der Ventiltechnik 4 integriert. Eine Gesamthöhe H der Lufttrocknungsanlage 1 beträgt 350mm, sodass die Lufttrocknungsanlage 1 somit problemlos in Niederflurfahrzeugen eingesetzt werden kann.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, anstelle von vier Lufttrocknerpatronen 3a, 3b, 3c, 3d auch sechs, acht oder mehr Lufttrocknerpatronen 3 an die Trägerplatte 2 anzuordnen. Weitere Lufttrocknerpatronen 3 können somit paarweise und achsensymmetrisch zueinander an die Trägerplatte 2 angeordnet werden, um eine Trocknerleistung der Lufttrocknungsanlage 1 zu erhöhen. Es ist aber auch denkbar, für geringe Trocknerleistungen auch nur zwei Lufttrocknungspatronen 3a, 3b an die Trägerplatte 2 anzuordnen.

Darüber hinaus ist die Anordnung und Anzahl der in der Trägerplatte 2 oder in deren Komponenten 4, 5, 6, 7 angeordneten Heizelemente 8 nicht beschränkt. Vielmehr ist dies vom Einsatzgebiet der Lufttrocknungsanlage 1 und der dort herrschenden Bedingungen abhängig. Der Grundgedanke der Erfindung besteht darin, dass die Trägerplatte 2 symmetrisch aufgebaut ist und verschiedene Komponenten der Ventiltechnik 4, Steuerung 5, Vorabscheidung 6 und Entwässerung 7 parallel in einer Ebene in der Trägerplatte 2 integriert sind.

### Bezugszeichenliste

- 1: Lufttrocknungsanlage
- 2: Trägerplatte
- 3a, 3b, 3c, 3d: Lufttrocknerpatronen
- 4: Komponenten der Ventiltechnik
- 5: Komponenten der Steuerung
- 6: Komponenten der Vorabscheidung
- 7: Komponenten der Entwässerung
- 8a, 8b, 8c: Heizelement
- 9a, 9b, 9c, 9d: Bajonettring
- 10a, 10b, 10c, 10d: Sicherheitsschraube
- 11a, 11b, 11c, 11d: Adapter

- H: Gesamthöhe

## Patentansprüche

1. Lufttrocknungsanlage (1) eines Druckluftversorgungssystems umfassend mindestens zwei auf einer Trägerplatte (2) lösbar angeordnete Lufttrocknerpatronen (3a, 3b), die nach dem Adsorptionstrocknungsprinzip Druckluft entfeuchten,
**dadurch gekennzeichnet, dass** die Trägerplatte (2) symmetrisch aufgebaut ist, wobei Komponenten der Ventiltechnik (4) sowie Komponenten der Steuerung (5), Komponenten der Vorabscheidung (6) und Komponenten der Entwässerung (7) parallel in einer Ebene in der Trägerplatte (2) integriert sind.

2. Lufttrocknungsanlage (1) nach Anspruch 1,
**dadurch gekennzeichnet, dass** eine Gesamthöhe (H) der Lufttrocknungsanlage (1) mindestens 250mm und höchstens 390mm beträgt.

3. Lufttrocknungsanlage (1) nach Anspruch 1,
**dadurch gekennzeichnet, dass** mindestens ein Heizelement (8) zur Beheizung der in der Trägerplatte (2) integrierten Komponenten in der Trägerplatte (2) integriert ist.

4. Lufttrocknungsanlage (1) nach Anspruch 1,
**dadurch gekennzeichnet, dass** die mindestens zwei Lufttrocknerpatronen (3a, 3b) achsensymmetrisch zueinander angeordnet sind und um einen Winkel von 20° bis 60° zu einer vertikal verlaufenden Ebene an der Trägerplatte (2) befestigt sind.

5. Lufttrocknungsanlage (1) nach Anspruch 1 oder 4,
**dadurch gekennzeichnet, dass** die mindestens zwei Lufttrocknerpatronen (3a, 3b) über ein Gewinde lösbar mit der Trägerplatte (2) verbunden sind, wobei das Lösen der mindestens zwei Lufttrocknerpatronen (3a, 3b) von der Trägerplatte (2) durch ein Ausschrauben der mindestens zwei Lufttrocknerpatronen (3a, 3b) um mindestens 20° und höchstens 90° erfolgt.

6. Lufttrocknungsanlage (1) nach einem der vorgehenden Ansprüche,
**dadurch gekennzeichnet, dass** die mindestens zwei Lufttrocknerpatronen (3a, 3b) mittels eines Bajonettrings (9) lösbar mit der Trägerplatte (2) verbunden sind.

7. Lufttrocknungsanlage (1) nach Anspruch 1,
**dadurch gekennzeichnet, dass** die mindestens zwei Lufttrocknerpatronen (3a, 3b) und der Bajonettring (9) aus Stahlblech gefertigt sind.

8. Lufttrocknungsanlage (1) nach Anspruch 6 oder 7,
**dadurch gekennzeichnet, dass** der Bajonettring (9) mit einer Sicherheitsschraube (10) gegen Verdrehung gesichert ist, wobei ein Ausschrauben der Sicherheitsschraube (10) eine Entlüftung der Lufttrocknungsanlage (1) bewirkt.

9. Lufttrocknungsanlage (1) nach Anspruch 1,
**dadurch gekennzeichnet, dass** weitere Lufttrocknerpatronen (3c, 3d) paarweise und achsensymmetrisch zueinander an die Trägerplatte (2) angeordnet sind, um eine Trocknerleistung der Lufttrocknungsanlage (1) zu erhöhen.

10. Lufttrocknungsanlage (1) nach Anspruch 1,
**dadurch gekennzeichnet, dass** zwischen der mindestens zwei Lufttrocknerpatronen (3a, 3b) und der Trägerplatte (2) ein Adapter (11) lösbar mit der Trägerplatte (2) verbunden ist, um den Einbau verschiedener Lufttrocknerpatronen (3) zu ermöglichen.
